(19) Europäisches Patentamt
European Patent Office
Office européen des brevets

(11) **EP 1 041 131 A1**

(12) **EUROPEAN PATENT APPLICATION**
published in accordance with Art. 158(3) EPC

(43) Date of publication:
**04.10.2000 Bulletin 2000/40**

(21) Application number: **98901090.5**

(22) Date of filing: **02.02.1998**

(51) Int. Cl.$^7$: **C09J 7/00**, C09J 7/02,
B26D 3/08, B32B 31/00

(86) International application number:
**PCT/JP98/00424**

(87) International publication number:
**WO 99/38928 (05.08.1999 Gazette 1999/31)**

(84) Designated Contracting States:
**DE GB**

(71) Applicant: **Tsujiden Co., Ltd.**
**Tokyo 168-0072 (JP)**

(72) Inventor: **ONISHI, Arataka**
**Omura-shi, Nagasaki 856-0024 (JP)**

(74) Representative:
**Piésold, Alexander J.**
**Frank B. Dehn & Co.,**
**European Patent Attorneys,**
**179 Queen Victoria Street**
**London EC4V 4EL (GB)**

(54) **DOUBLE FACED TAPE, METHOD OF AND APPARATUS FOR MANUFACTURING SAME**

(57)     The mass production of a coil-form, double-coated tape 10 is made possible by unwinding and conveying a roll-form, raw-fabric tape 5, with which a raw-fabric tape body, comprised of an adhesive matrix 14 overlaid over a wide, band-shaped separator, is wound so that adhesive matrix 14 side will be at the inner side, cutting the conveyed raw-fabric tape body 6 into a plurality of bands in the conveying width direction by means of a tape cutter A, cutting the adhesive matrix layer 14 of each of the cut band-shaped tape bodies 11 into three thin, cords in the width direction by means of an adhesive matrix cutter B, winding up and thereby removing the edge trimmings 14a of the cut adhesive matrix layer by means of an adhesive matrix windup shaft 40, and winding up and making into a coil the tape body 11, on which adhesive matrix 14b is overlaid only at the center in the width direction, by means of tape windup shaft 50.

Figure 1

Figure 3

## Description

Field of the Art

The present invention concerns a double-coated coated tape, in which an adhesive matrix is overlaid on only the central part in the width direction of a band-shaped separator of what is generally called release paper or release film of predetermined width and in which an adhesive matrix is not provided on the left and right edge portions of the band-shaped separator, a method of manufacturing the same tape, and a device for manufacturing the same tape.

Background Art

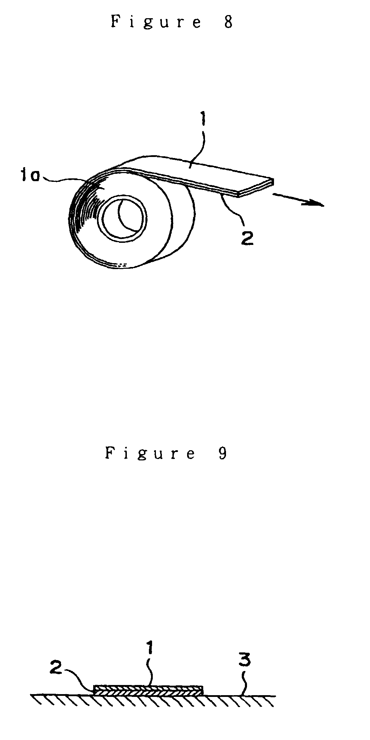

With a conventional double-coated tape, a tape body, with which an adhesive matrix 2 is overlaid on the entire surface at one side of a band-shaped separator 1 of predetermined width is wound into a coil so that the adhesive matrix 2 side will be at the inner side as shown in Fig. 8.

To use this double-coated tape, the double-coated tape body, which has been drawn out from the coil body as indicated by the arrow in Fig. 8 and cut to a certain length, is adhered with the adhesive matrix 2 side facing the adherend 3 as shown in Fig. 9. Next, tweezers are used or fingertips are used directly to peel separator 1 so that only adhesive matrix 2 will be left on adherend 3 and another unillustrated member is adhered onto adhesive matrix 2, which is exposed on adherend 3.

The coil-form double-coated tape shown in Fig. 8 is manufactured by cutting (slicing) or slitting, as shown by the hypothetical lines in Fig. 10, a raw-fabric tape 5, that has been arranged by winding a wide, band-shaped tape body, with which an adhesive matrix is overlaid on one surface of a separator, into a roll so that the adhesive matrix side will be at the inner side.

However, with the prior-art double-coated tape described above, since adhesive matrix 2 is overlaid across the entire width of separator 1, it is difficult to pick up just separator 1 from the adhered tape body with fingers or with tweezers, and the work of peeling separator 1 to expose adhesive matrix 2 is troublesome.

Also, since adhesive matrix 2 is exposed and is sticky at the coil side face 1a of the double-coated tape, the double-coated tape could not be handled conveniently.

Furthermore, for automating the process of adhering the double-coated tape body that has been drawn out from the coil-form double-coated tape onto a predetermined portion of a member, an arrangement that guides edge parts of the drawn-out, double-coated tape body 1 to the predetermined position by means of a guide member 8, is essential. However, when the prior-art double-coated tape is used in an automatic adhering process, the adhesive matrix 2 that is exposed at the edge parts of the double-coated tape body contacts guide member 8 to obstruct smooth conveying of the double-coated tape body. It was thus difficult to draw out the double-coated tape body and position it accurately onto an appropriate position in the width direction.

The present invention has been made in view of the above problems of the prior art and the first object thereof is to present a double-coated tape with which the separator can be peeled easily by providing the adhesive matrix only at the central part in the width direction of the separator. The second and third objects of the present invention are to present a method and device for manufacturing a double-coated tape with which the adhesive matrix is provided only at the central part in the width direction of the separator.

Disclosure of the Invention

In order to achieve the abovementioned first object, the First Claim of the present invention provides in a double-coated tape, with which a double-coated tape body, arranged by overlaying an adhesive matrix on one surface of a band-shaped separator of predetermined width, is wound into a coil so that the adhesive matrix side will be at the inner side, a double-coated tape in which the adhesive matrix is provided so as to leave the portions near the left and right edges of the separator free of the adhesive matrix.

When the double-coated tape body is adhered onto an adherend, since a gap, equivalent to the thickness of the adhesive matrix layer, is formed between the adherend and the left and right edge portions of the separator at which the adhesive matrix layer is not formed, the left and right edge portions of the separator can be picked up readily with fingers or tweezers and the separator can thus be peeled off readily from the adhesive matrix layer that is adhered onto the adherend.

Furthermore, since the adhesive matrix is not exposed at the side edge portions of the double-coated tape body, the side faces of the coil-form double-coated tape will not be sticky, making the handling and storage of the double-coated tape easy.

Moreover, since the adhesive matrix is not exposed at the side edge portions of the double-coated tape body, the double-coated tape can be drawn out or conveyed smoothly even in an arrangement where the side edge portions of a double-coated tape body that has been drawn out from the coil-form double-coated tape is guided by a guide member.

In order to achieve the abovementioned second object, the Second Claim of the present invention provides a method of manufacturing double-coated tape comprising the steps of unwinding and conveying a raw-fabric tape, which has been arranged by winding into a roll a raw-fabric tape body with which an adhesive matrix has been overlaid on one surface of a wide, band-shaped separator, using a tape cutter to cut the conveyed raw-fabric tape body into a plurality of bands, that extend along the conveying direction, using an adhesive matrix cutter to cut the central part in the width direction of the adhesive matrix layer of each of the cut band-shaped tape bodies to a predetermined width, using an adhesive matrix windup shaft to wind up and thereby remove the thin, cord-like, side edge trimmings of the adhesive matrix layer that have been cut, and using a tape windup shaft to wind up and thereby forming into a coil the band-shaped tape body on which the adhesive matrix is overlaid only at the central part in the width direction.

By providing a process of cutting the raw-fabric tape body (separator and adhesive matrix layer) into a plurality of bands, the process of cutting to a predetermined width the central part in the width direction of the adhesive matrix layer of each band-shaped tape body that has been cut, and the process of winding up and thereby removing the thin cord-like, side edge trimmings of the cut adhesive matrix layer in a continuous tape body conveying path that runs from the unwinding and conveying of the roll-form raw-fabric tape as a raw-fabric tape body to the winding of the tape body into a coil around a tape windup shaft, a plurality of coil-form, double-coated tapes in which the adhesive matrix is overlaid on only the central part in the width direction of the separator can be manufactured.

With the Third Claim of the present invention, the tape cutter and the adhesive matrix cutter in the method of manufacturing double-coated tape of the Second Claim are arranged to be made integral to perform the cutting of the raw-fabric tape body (separator and adhesive matrix layer) by the tape cutter and the cutting of the adhesive matrix layer by the adhesive matrix cutter at the same time.

By integrating the process of cutting the raw-fabric tape body (separator and adhesive matrix layer) and the process of cutting to a predetermined width the central part in the width direction of the adhesive matrix layer of each band-shaped tape body that has been cut, the number of processes that make up the method of manufacturing double-coated tape is reduced.

In order to achieve the abovementioned third object, the Fourth Claim of the present invention presents a double-coated tape manufacturing device comprised of a raw-fabric tape shaft, which fittingly supports a raw-fabric tape, which is arranged by winding a double-coated tape body, in which an adhesive matrix is overlaid on one surface of a wide, band-shaped separator, into a roll with the adhesive matrix side at the inner side, and unwinds and feeds out the roll-form raw-fabric tape,

a tape and adhesive matrix cutter, in which are integrated a tape cutter, that cuts the raw-fabric tape body (separator and adhesive matrix layer) that has been conveyed from the raw-fabric tape shaft into a plurality of bands that extend in the conveying direction, and an adhesive matrix cutter, which cuts into predetermined width the central part in the width direction of the adhesive matrix layer of each band-shaped tape body that has been cut by the tape cutter,

an adhesive matrix windup shaft, which winds up the thin, cord-like, side edge trimmings of adhesive matrix layer that have been cut off by the adhesive matrix cutter, and

a tape windup shaft, which winds up the band-shaped tape body, with which the adhesive matrix is overlaid only at the central part in the width direction due to the removal of the side edge trimmings of the adhesive matrix layer by the adhesive matrix windup shaft.

A plurality of coil-form, double-coated tapes, in which the adhesive matrix is overlaid only on the central part in the width direction of the separator, can thus be manufactured with an extremely simple device structure comprised of a raw-fabric tape shaft, a tape and adhesive matrix cutter, an adhesive matrix windup shaft, and a tape windup shaft.

With the Fifth Claim of the present invention, guide rolls for controlling the direction of the conveying of the tape body are provided in the tape body conveying path between the raw-fabric tape shaft and tape windup shaft of the double-coated tape manufacturing device of the Fourth Claim.

By changing the direction in which the tape body is conveyed by means of the guide rolls, the degree of freedom of layout of the raw-fabric tape shaft, tape and adhesive matrix cutter, adhesive matrix windup shaft, and tape windup shaft in the device is increased.

With the Sixth Claim of the present invention, the tape and adhesive matrix cutter of the double-coated tape manufacturing device of the Fourth Claim is comprised of

a cutter roll, in which a plurality of tape cutting rotating blades, that are disposed parallel to each other with a predetermined spacing provided in between in the axial direction, a pair of adhesive matrix cutting rotating blades, that are disposed parallel to each other at the inner side of each set of adjacent tape cutting rotating blades, are integrated coaxially and are disposed in the direction that traverses the raw-fabric tape body that is being conveyed, and

a base roll, which is disposed parallel to the cutter roll so that its outer peripheral surface contacts the tape cutting rotating blades and is rotated synchronously with and in the direction in reverse of the rotation of the cutter roll.

In the process of being cut by the rotating blades, the raw-fabric tape body is held in a manner whereby the rear surface side (the side on which the adhesive matrix layer is not formed) thereof is pressed against the outer peripheral surface of the base roll and the cutting position of the raw-fabric tape body is thus prevented from varying (becoming dispersed) in the width direction of the raw-fabric tape body.

The separator cutting rotating blades, that co-act with the base roll and comprise the tape cutter, and the adhesive matrix cutting rotating blades, that co-act with the base roll and comprise the adhesive matrix cutter, are integrated coaxially as a cutter roll, making the tape and adhesive matrix cutter compact.

Furthermore, at the tape and adhesive matrix cutter, the raw-fabric tape body is cut into bands and, at the same time, just the central part in the width direction of the adhesive matrix layer of each band-shaped tape body that has been cut is cut further to a predetermined width.

With the Seventh Claim of the present invention, disks that press against the motor-driven base roll are coaxially integrated at both end parts of the cutter roll in the double-coated tape manufacturing device of the Sixth Claim to rotate the cutter roll and base roll synchronously.

Since the cutter roll is made to rotate synchronously with and in the direction in reverse of the rotation of the base roll by the disks that are pressed against the motor-driven base roll, there is no need to provide a separate motor for driving the cutter roll.

With the Eighth Claim of the present invention, the gap between the adhesive matrix cutting rotating blades and the outer peripheral surface of the base roll in the double-coated tape manufacturing device of the sixth or Seventh Claim is set equivalent to the thickness of the separator.

The adhesive matrix cutting rotating blades will thus cut just the adhesive matrix layer overlaid on the separator without flawing the separator.

With the Ninth Claim of the present invention, the gap between the adhesive matrix cutting rotating blades and the outer peripheral surface of the base roll in the double-coated tape manufacturing device of the sixth or Seventh Claim is set to be slightly smaller than the thickness of the separator.

The adhesive matrix cutting rotating blades are thus made to penetrate to the surface layer part of the separator below the adhesive matrix layer of the tape body that has been cut so that the adhesive matrix layer will be cut without fail.

Brief Description of the Drawings

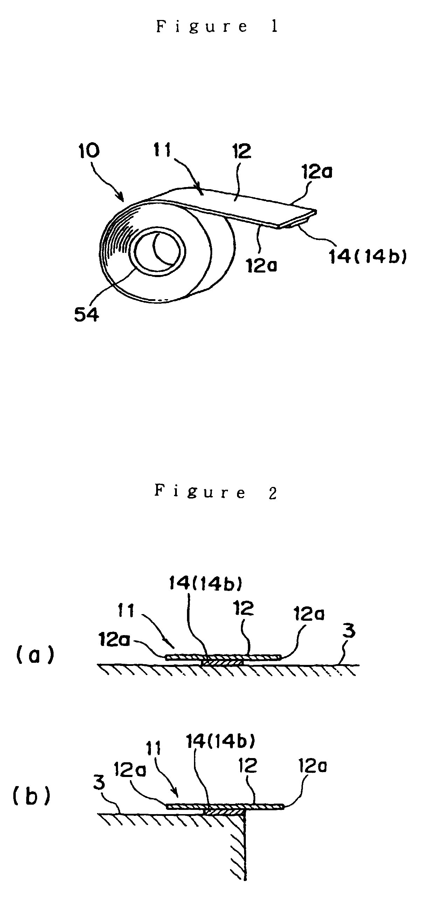

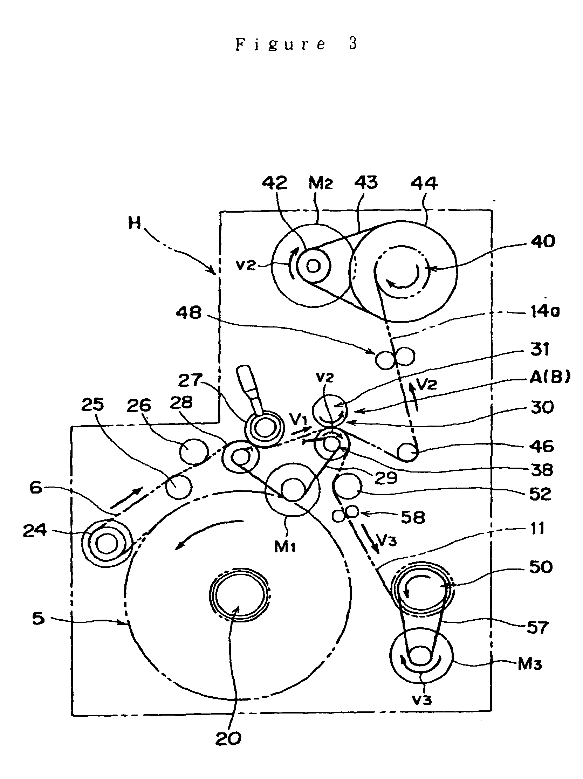

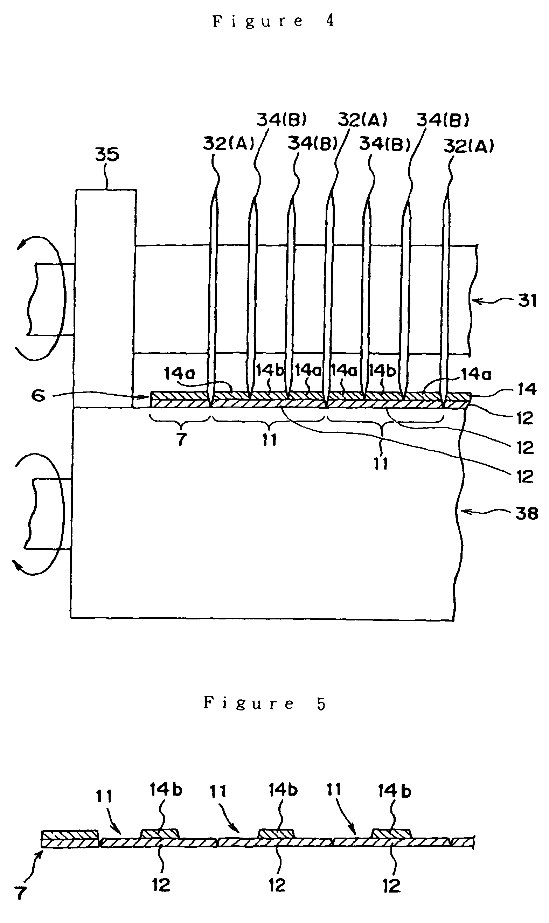

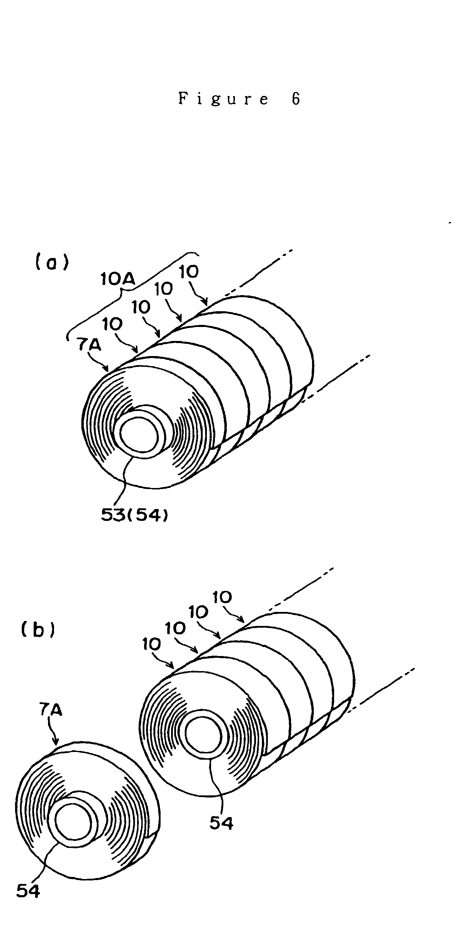

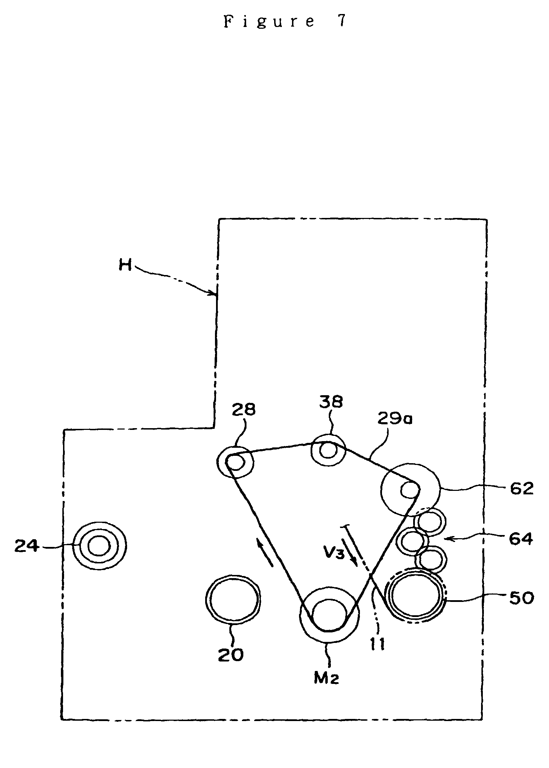

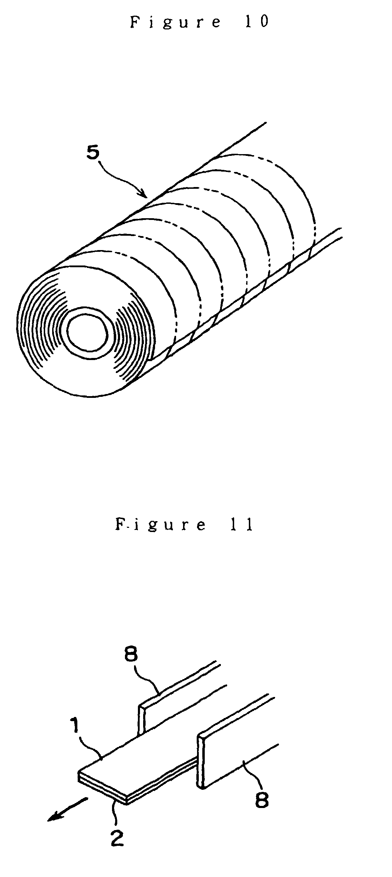

Fig. 1 is a perspective view of a double-coated tape of an embodiment of the present invention, Fig. 2(a) is a sectional view of a double-coated tape that has been adhered onto an adherend, Fig. 2(b) is a sectional view of a double-coated tape that has been adhered onto an adherend at a corner part of a member, Fig. 3 is an overall arrangement diagram of a double-coated tape manufacturing device, which is an embodiment of the present invention, Fig. 4 is an enlarged sectional view of the tape and adhesive matrix cutter, which is a principal part of the same device, Fig. 5 is an enlarged sectional view of the tape body that is wound up by the tape windup shaft, Fig. 6 shows perspective views of a double-coated tape that has been manufactured by the same device, Fig. 7 is a diagram that shows another embodiment of the tape windup shaft drive mechanism, Fig. 8 is a perspective view of a prior-art double-coated tape, Fig. 9 is a sectional view of a prior-art tape body that has been adhered onto an adherend, Fig. 10 is a perspective view explaining the manufacturing method of the prior art, and Fig. 11 is a schematic view of the tape guide mechanism that is used in an automatic tape adhering process.

Best Mode for Carrying Out the Present Invention

The modes of implementation of the present invention shall now be explained by way of the embodiments.

Figs. 1 through 6 show an embodiment of the present invention with Fig. 1 being a perspective view of a double-coated tape, which is an embodiment of the present invention, Figs. 2(a) and (b) being sectional views of a double-coated tape that has been adhered onto an adherend, Fig. 3 being an overall arrangement diagram of a double-coated tape manufacturing device, Fig. 4 being an enlarged sectional view of the separator and adhesive matrix cutter, which is a principal part of the same device, Fig. 5 being an enlarged sectional view of the tape body that is wound up by the tape windup shaft, and Fig. 6 being perspective views of a double-coated tape that has been manufactured by the same device, with (a) being a perspective view of the condition in which the tape is wound up by the tape windup shaft and (b) being a perspective view of a continuous double-coated tape body from which the trimming coil has been removed.

In Fig. 1, symbol 10 indicates a double-coated tape with which a tape body 11, in which an adhesive matrix 14b has been overlaid on one surface of a band-shaped separator 12 of predetermined width (for example, 3mm width), is wound around and made integral in coil-like form with a paper tube 52 of the same width as the separator 12 so that the adhesive matrix 14 (14b) side will be at the inner side. Adhesive matrix 14 (14b) is provided so as to leave the edge portions 12a at both sides in the width direction of separator 12 free of the adhesive matrix. That is, an adhesive matrix 14 (14b) of a predetermined width (for example, 1.2mm width) is overlaid only on a central part in the width direction of separator 12 and regions of predetermined width (for example, 0.9mm width) along the left and right edge parts 12a of separator 12 are not provided with adhesive matrix 14 (14b).

Thus when tape body 11 is adhered onto an adherend 3 as shown in Figs. 2(a) and (b), the edge portions 12a of the separator will be lifted above adherend 3 by just the thickness of adhesive matrix 14b. The edge portions 12a of separator 12 can thus be picked up easily with fingers and separator 12 can be peeled off readily to expose adhesive matrix 14b. This is especially effective in the case where an adhesive matrix 14b is to be formed on an adherend 3 at a corner part of a member as shown in Fig. 2(b).

Examples of the structure of double-coated tape 10 include that in which an adhesive matrix 14, in which an adhesive agent is formed integrally on both surfaces of an unwoven cloth or plastic film, is overlaid on a separator 12, arranged from release paper or release film on which a polyethylene coating or a silicone coating has been applied, and that in which an adhesive matrix 14, made of silicone rubber, is overlaid on a separator 12, formed from polyester film.

Fig. 3 shows the overall arrangement of a double-sided tape manufacturing device in which a raw-fabric tape 5 (see Fig. 10), arranged by winding into a roll a wide, band-shaped tape body having adhesive matrix 14 overlaid on one surface of separator 12, is processed into a double-coated tape 10, such as that shown in Fig. 1. Symbol H indicates the housing of this device.

Inside device housing H is provided a structure in which a raw-fabric tape shaft 20, which fittingly supports roll-form raw-fabric tape 5 and unwinds roll-form raw-fabric tape 5 and feeds it out as raw-fabric tape body 6, a tape and adhesive matrix cutter 30, which cuts the raw-fabric tape body 6, that has been conveyed from raw-fabric tape shaft 20, into bands of predetermined width along the conveying direction and cuts just the adhesive matrix layer 14 of each of the cut band-shaped tape bodies 11 into three thin, cords in the width direction, an adhesive matrix windup shaft 40, which winds up the thin, cord-like side edge trimmings 14a at the left and right sides in the width direction of the adhesive matrix layer 14 that has been cut, and a tape windup shaft 50, which winds up the band-shaped tape body 11 (see Fig. 5) from which the left and right edge trimmings 14a have been removed by adhesive matrix windup shaft 40 and with which only the adhesive matrix layer 14 (14b) at the central part in the width direction remains, are disposed parallel to each other.

Raw-fabric tape shaft 20 has a structure that is rotatably supported by a bearing, and roll-form raw-fabric tape 5, which has been fitted onto raw-fabric tape shaft 20 is pulled and unwound naturally by raw-fabric tape body 6 being conveyed by drive rolls 28 and 38 and by the respective band-shaped tape bodies 11, that have been cut at tape and adhesive matrix cutter 30, being wound up by tape windup shaft 50. The unwound raw-fabric tape body 6 is guided by guide rolls 24, 25, and 26 and conveyed to tape and adhesive matrix cutter 30. Symbol 27 indicates a tension roll and is for maintaining the raw-fabric tape body 6, that is fed to cutter 30, under fixed tension to prevent drooping. Symbol $M_1$ indicates the motor for driving drive rolls 28 and 38. The rotating force of motor $M_1$ is transmitted to drive rolls 28 and 38 by a belt 29, and raw-fabric tape body 6 is conveyed at a fixed velocity $V_1$ by the rotation of drive rolls 28 and 38.

As shown in Fig. 4, tape and adhesive matrix cutter 30 is comprised of a cutter roll 31, which is a free roll that is disposed in the direction that traverses the conveyed raw-fabric tape body 6, and a metal base roll 38, which is a drive roll that is disposed parallel to cutter roll 31. Cutter roll 31 has a structure in which a plurality of tape cutting rotating blades 32, that are disposed parallel to each other with a predetermined spacing provided in between in the axial direction, and pairs of adhesive matrix cutting rotating blades 34, that are, respectively, disposed parallel to each other at the inner side of adjacent tape cutting rotating cutter blades 32, are integrated coaxially, and base roll 38 is disposed so that its outer peripheral surface will be in contact with tape cutting rotating blades 32 of cutter roll 31.

Disks 35, of the same outer diameter dimension as tape cutting rotating blades 32, are coaxially integrated to the left and right end parts of cutter roll 31, and by these disks 35 being kept pressed against base roll 38, cutter roll 31 is made to rotate in synchronization with and in the direction in reverse of the rotation of base roll 38.

When raw-fabric tape body 6 passes between the rolls 31 and 38 with the adhesive matrix layer 14 side up, it is cut into a plurality of bands (bands of a width equivalent to the distance between tape cutting rotating blades 32) in the width direction (left-to-right direction in Fig. 4) and the adhesive matrix layer 14 of each of the cut band-shaped tape bodies 11 is cut in the width direction into three thin, cords (cut at positions separated from the edge portions of band-shaped tape body 11 by the distance between rotating blades 32 and 34).

That is tape cutting rotating blades 32 and base roll 38 of cutter roll 31 comprise a tape cutter A that cuts raw-fabric tape body 6 (separator 12 and adhesive matrix layer 14) into a plurality of bands of predetermined width.

The adhesive matrix cutting rotating blades 34 and base roll 38 of cutter roll 31 comprise an adhesive matrix cutter B, with which the gap between the outer peripheral surfaces of rotating blades 34 and base roll 38 are set equivalent to the thickness of separator 12 and which cuts just the adhesive matrix layer 14 of each of the cut tape bodies 11 further into three thin, cords in the width direction. Tape and adhesive matrix cutter 30 has a structure in which tape cutter A and adhesive matrix cutter B are integrated so that the cutting of raw-fabric tape body 6 by tape cutter A and the cutting of adhesive matrix layer 14 by adhesive matrix cutter B are carried out at the same time.

Also, since the raw-fabric tape body 6 between cutter roll 31 and base roll 38 is cut by rotating blades 32 and 34 with the side on which adhesive matrix layer 14 is not formed being pressed against the outer peripheral surface of base roll 38, the cutting position will not vary in the width direction. Thus with the present embodiment, the interval between adhesive matrix cutting rotating blades 34 can be set to as small as 0.5mm to make the width of adhesive matrix layer 14b of the double-coated tape shown in Fig. 1 a narrow width of 0.5mm.

To be more precise, the gap between the abovementioned adhesive matrix cutting blades rotating 34 and the outer peripheral surface of base roll 38 is set a few microns smaller than the thickness of separator body 12 so that the edges of rotating blades 34 will penetrate to the surface layer portion of separator body 12 below adhesive matrix layer 14. Adhesive matrix cutter B can thus cut adhesive matrix layer 14 without fail.

The thin, cord-like side edge trimmings of adhesive matrix layer 14, that have been cut by adhesive matrix cutter B, are wound up by adhesive matrix windup shaft 40, which is disposed above cutter roll 31 and parallel to cutter roll 31, and are thereby peeled away and removed without fail from the adhesive matrix layer 14 remaining at the central part in the width direction.

Symbol $M_2$ in Fig. 3 indicates a motor for rotating adhesive matrix windup shaft 40. This windup shaft 40 is rotated at a predetermined rotation velocity by a driving force transmission mechanism comprised of a motor side chain wheel 42, a chain 43, and a windup side chain wheel 44. Symbol 46 indicates a guide roll that guides the side edge trimmings 14a of adhesive matrix layer 14, that have been cut by adhesive matrix cutter B (rotating blades 34, base roll 38), to windup shaft 40.

Symbol 48 indicates a velocity detection roll that is disposed in the middle of the conveying path of side edge trimmings 14a between guide roll 46 and windup shaft 40 and the rotation velocity $v_2$ of motor $M_2$ is fed back based on the windup velocity of side edge trimmings 14a detected by velocity detection roll 48 and controlled so that the velocity $V_2$ of windup of side edge trimmings 14a by windup shaft 40 will be fixed.

That is, if the rotation velocity $v_2$ of motor $M_2$ is fixed, since the coil diameter of the side edge trimmings 14a that have been wound around windup shaft 40 will increase gradually with the progress of windup of side edge trimmings 14a by windup shaft 40 and the windup velocity $V_2$ of side edge trimmings 14a will become faster than the conveying velocity of tape body 11 by cutter 30 (cutter roll 31, base roll 38), the side edge trimmings 14a that are being wound up tend to become cut by excessive tension, making it impossible to wind up side edge trimmings 14a continuously.

Thus in the present embodiment, the windup velocity $V_2$ of side edge trimmings 14a is detected by velocity detection roll 48 and the rotation velocity $v_2$ of motor $M_2$ is controlled so that this windup velocity $V_2$ will always be a fixed velocity ($V_2 = V_1$) for enabling continuous windup of side edge trimmings 14a.

Tape windup shaft 50 is disposed at a position in front (to the right side in Fig. 3) of raw-fabric tape shaft 20 and below base roll 38 and is driven by motor $M_3$ to rotate at a predetermined velocity. Tape windup shaft 50 is arranged to wind up the cut end 7 of raw-fabric tape 6, which was cut by the tape cutting rotating blade 32 at the endmost position in the axial direction of cutter roll 31, and the plurality of band-shaped tape bodies (tape bodies on which adhesive matrix layer 14b is overlaid only at the central part in the width direction) 11, which have passed through tape and adhesive matrix cutter 30 and have been removed of the adhesive matrix side edge trimmings 14a. Symbol 52 indicates a guide roll.

The rotating force of motor $M_3$, which rotatingly drives tape windup shaft 50, is transmitted to tape windup shaft 50 via belt 57. Symbol 58 indicates a velocity detection roller, which is disposed in the tape body conveying path between tape and adhesive matrix cutter 30 and tape windup shaft 50 and detects the windup velocity of tape body 11, which is wound up by tape windup shaft 50. Feedback control of the rotation velocity $v_2$ of motor $M_3$ is performed based on the windup velocity of tape body 11 detected by velocity detection roller 58. That is, when the windup of tape body 11 by tape windup shaft 50 progresses, an unfavorable condition can occur in which the windup velocity of tape body 11 by tape windup shaft 50 becomes excessive in comparison with the conveying velocity of tape body 11 from cutter 30. The rotation velocity $v_3$ of motor $M_3$ is thus controlled so that the windup velocity of tape body 11 will always be fixed ($V_3 = V_1$) to enable continuous windup of tape body 11.

At the outer periphery of tape windup shaft 50, paper tubes 54 (see Figs. 1 and 6), of a width that matches the width of double-coated tape 10 (band-shaped tape body 11), are disposed in a serial and continuous manner. The number of these paper tubes is two more than the number of the band-shaped tape bodies 11, that have been cut and are conveyed, and this paper tube series 53 is sandwiched and integrated in the axial direction with tape windup shaft 50 by sandwiching rings (not shown) disposed at both ends of tape windup shaft 50. Thus at tape windup shaft 50 is formed a roll-form double-coated tape set 10A, in which the coil-shaped double coated tapes 10, comprised of tape body 11 wound around paper tube 54, and cut end coils 7A, comprised of the cut end 7 of the raw-fabric tape wound around paper tube 54, are disposed continuously in a manner whereby their side faces are abutted against each other as shown in Fig. 6(a). Numbers of double-coated tapes 10 are thus obtained by loosening the sandwiching rings, drawing out the roll-form tape set 10A from tape windup shaft 50, and removing the cut end coils 7A at both ends.

Thus with the method of the present embodiment, a single, roll-form, raw-fabric tape 5 can be processed into numbers of roll-form, double-coated tape 10 in a short time by the unwinding and conveying of a single, roll-form, raw-fabric tape 5 of predetermined length that has been fitted to raw-fabric tape shaft 50, the cutting of the conveyed raw-fabric tape body 6 and the adhesive matrix layer 14, respectively, in the longitudinal direction (conveying direction) by means of tape and adhesive matrix cutter 30, and the windup of each tape body 11 around tape windup shaft 50 upon removal by windup of the unnecessary adhesive matrix layer (side edge trimmings 14a) of each of the cut tape bodies 11 around adhesive matrix windup shaft 40.

Fig. 7 shows another embodiment of the drive mechanism for driving the tape windup shaft, and in this embodiment, motor $M_2$ for driving drive rolls 28 and 38 is arranged to drive tape windup shaft 50 as well.

That is, the rotation of motor $M_2$ is transmitted to tape windup shaft 50 via a belt 29a, a powder clutch 62, and a gear mechanism 64. The windup velocity $V_3$ of tape body 11 is thus controlled by powder clutch 62 to be fixed at all times ($V_3 = V_1$).

A slide-contact protrusion, which contacts the inner peripheral face of the cylindrical paper tube series 53, is provided at the outer peripheral face of tape windup shaft 50 to comprise a structure in which paper tube series 53 is supported by a priorly known slip clutch (not shown).

That is, since paper tube series 53 is sandwiched and fixed to tape windup shaft 50 by sandwiching rings, paper tube series 53 can move integrally with tape windup shaft 50. However, when the load acting on tape windup shaft 50 (the tension force that acts on tape body 11) exceeds the tolerance of the slip clutch (the frictional resistance that acts between the slide-contact protrusion and the inner peripheral face of paper tube series 53), the slide-contact protrusion slides in the circumferential direction along the inner peripheral face of paper tube series 53. Tape windup shaft 50 thus slips and rotates freely with respect to paper tube series 53 so that tape body 11 will not be wound up by tape windup shaft 50 unnecessarily and the tape body 11 between cutter 30 and tape windup shaft 50 will always be kept under a fixed condition of tension.

Industrial Applications

As is clear from the above description, by the double-coated tape of the First Claim, work using double-coated tape is made easy since the separator can be peeled off easily from the adhesive matrix.

Also since the side faces of the coil-form, double-coated tape are not sticky, it is easy to handle and store the double-coated tape.

Also since the adhesive matrix is not exposed at the edge portions of the tape body, smooth draw-out and precise positioning of the tape body at an appropriate position in the width direction can be performed even when the edge portions of the tape body, that have been drawn out from the coil-form double-coated tape, are guided with a guide member. Automatic adhesion of the double-coated tape can thus be achieved.

By the double-coated tape manufacturing method of the Second Claim, numbers of coil-form double-coated tape, with which the adhesive matrix is overlaid just on the central part in the width direction of the separator, can be made in an extremely short process comprising the steps of conveying the raw-fabric tape body unwound from the raw-fabric tape, cutting the raw-fabric tape body along the conveying direction, cutting and thereby removing just a part of the adhesive matrix layer, and then winding up the tape body. This method can thus be said to be a method that is extremely suited for mass production.

According to the Third Claim, since the cutting of the raw-fabric tape body by the tape cutter and the cutting of the adhesive matrix layer by the adhesive matrix cutter are performed at the same time, the double-coated tape manufacturing method is simplified and the time required for manufacture is shortened.

With the double-coated tape manufacturing device of the Fourth Claim, since coil-form double-coated tape, with which the adhesive matrix is overlaid only on the central part in the width direction of the separator, can be mass produced by a device of extremely simple structure comprised of a raw-fabric tape shaft, a tape and adhesive matrix cutter, an adhesive matrix windup shaft, and a tape windup shaft, it becomes possible to supply inexpensive double-coated tape to the market.

According to the Fifth Claim, the degree of freedom of layout of the raw-fabric tape shaft, tape and adhesive matrix cutter, adhesive matrix windup shaft, and tape windup shaft within the device is increased and the making of the device compact is enabled by the provision of a suitable number of guide rollers, that control the conveying direction of the tape body, in the tape body conveying path between the raw-fabric tape shaft and the tape windup shaft.

According to the Sixth Claim, since the separator and the adhesive matrix layer can be cut precisely in the width direction, a double-coated tape with an extremely narrow adhesive matrix layer of 0.5mm width can be manufactured. Also, the tape and adhesive matrix cutter can be made compact and thus the entire device can be made compact.

According to the Seventh Claim, since there is no need to provide a separate drive source (motor) for driving the tape and adhesive matrix cutter, the device structure is made that much more simple and compact.

According to the Eighth Claim, since there is no danger of flawing the separator in the process in which the adhesive matrix layer is cut by the adhesive matrix cutting rotating blades, the occurrence of defective items with cuts in the separator is prevented.

According to the Ninth Claim, since the edges of the adhesive matrix cutting rotating blades reach the surface layer part of the separator below the adhesive matrix layer, coil-form, double-coated tape from which the adhesive matrix layer edge trimmings have been removed without fail can be obtained. Since the degree of penetration of the edges of the adhesive matrix cutting rotating blades into the surface layer of the separator is minute, there is no danger of degrading the function of the separator.

**Claims**

1.  A double-coated tape, with which a double-coated tape body, arranged by overlaying an adhesive matrix on one surface of a band-shaped separator of predetermined width, is wound into a coil so that the adhesive matrix side will be at the inner side, said double-coated tape being characterized in that the adhesive matrix is provided so as to leave portions near the left and right edge portions of the separator free of the adhesive matrix.

2.  A method of manufacturing double-coated tape comprising the steps of unwinding and conveying a raw-fabric tape, which has been arranged by winding into a roll a raw-fabric tape body in which an adhesive matrix has been overlaid on one surface of a wide, band-shaped separator, using a tape cutter to cut the conveyed raw-fabric tape body into numbers of bands that extend along the conveying direction, using an adhesive matrix cutter to cut the central part in the width direction of the adhesive matrix layer of each of the cut band-shaped tape bodies to a predetermined width, using an adhesive matrix windup shaft to wind up and thereby remove the thin cord-like, side edge trimmings of the adhesive matrix layer that have been cut, and using a tape windup shaft to wind up into a coil the band-shaped tape body on which the adhesive matrix is overlaid only at the central part in the width direction.

3.  A method of manufacturing double-coated tape as set forth in claim 2, wherein the cutting of the raw-fabric tape body by the tape cutter and the cutting of the adhesive matrix layer by the adhesive matrix cutter are performed at the same time by a structure in which the tape cutter and the adhesive matrix cutter are integrated.

4.  A double-coated tape manufacturing device comprised of a raw-fabric tape shaft which fittingly supports a raw-fabric tape, arranged by winding a raw-fabric tape, in which an adhesive matrix is overlaid on one surface of a wide, band-shaped separator, into a roll with the adhesive matrix side at the inner side, and unwinds and feeds out the roll-form raw-fabric tape,

   a tape and adhesive matrix cutter, in which are integrated a tape cutter, that cuts the raw-fabric tape body that has been conveyed from the raw-fabric tape shaft into numbers of bands that extend in the conveying direction, and an adhesive matrix cutter, which cuts into a predetermined width the central part in the width direction of the adhesive matrix layer of each band-shaped tape body that has been cut by the tape cutter,
   an adhesive matrix windup shaft, which winds up the thin, cord-like, side edge trimmings of adhesive matrix layer that have been cut off by the adhesive matrix cutter, and
   a tape windup shaft, which winds up the band-shaped tape body, with which the adhesive matrix is overlaid only at the central part in the width direction due to the removal of the side edge trimmings of the adhesive matrix layer by the adhesive matrix windup shaft.

5.  A double-coated tape manufacturing device as set forth in Claim 4, wherein guide rolls for controlling the direction of the conveying of the tape body are provided in the tape body conveying path between the raw-fabric tape shaft and tape windup shaft.

6.  A double-coated tape manufacturing device as set forth in Claim 4, wherein the tape and adhesive matrix cutter is comprised of

   a cutter roll, in which a plurality of tape cutting rotating blades, that are disposed parallel to each other with a predetermined spacing provided in between in the axial direction, a pair of adhesive matrix cutting rotating blades, that are disposed parallel to each other at the inner side of each set of adjacent tape cutting rotating blades, are integrated coaxially and are disposed in the direction that traverses the raw-fabric tape body that is being conveyed, and
   a base roll, which is disposed parallel to the cutter roll so that its outer peripheral surface contacts the tape cutting rotating blades and is rotated synchronously with and in the direction in reverse of the rotation of the cutter roll.

7.  A double-coated tape manufacturing device as set forth in Claim 6, wherein disks that press against the motor-driven base roll are coaxially integrated at both end parts of the cutter roll to rotate the cutter roll and base roll synchronously.

8. A double-coated tape manufacturing device as set forth in Claim 6 or 7, wherein the gap between the adhesive matrix cutting rotating blades and the outer peripheral surface of the base roll is set equivalent to the thickness of the separator.

9. A double-coated tape manufacturing device as set forth in Claim 6 or 7, wherein the gap between the adhesive matrix cutting rotating blades and the outer peripheral surface of the base roll is set to be slightly smaller than the thickness of the separator.

Figure 1

Figure 2

Figure 3

Figure 4

Figure 5

Figure 6

(a)

53(54)

(b)

54

7A

54

Figure 7

Figure 8

Figure 9

Figure 10

Figure 11

INTERNATIONAL SEARCH REPORT

International application No.

PCT/JP98/00424

| A. CLASSIFICATION OF SUBJECT MATTER |
|---|
| Int. Cl⁶ C09J7/00, 7/02 |
| According to International Patent Classification (IPC) or to both national classification and IPC |

| B. FIELDS SEARCHED |
|---|
| Minimum documentation searched (classification system followed by classification symbols) |
| Int. Cl⁶ C09J7/00-7/04 |
| Documentation searched other than minimum documentation to the extent that such documents are included in the fields searched |
| Jitsuyo Shinan Koho          1926 - 1996    Jitsuyo Shinan Toroku |
| Kokai Jitsuyo Shinan Koho     1971 - 1998    Koho         1996 - 1998 |
| Toroku Jitsuyo Shinan Koho    1994 - 1998 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
|---|---|---|
| X | Microfilm of the specification and drawings annexed to the request of Japanese Utility Model Application No. 91825/1987 (Laid-open No. 199147/1988)(Nitto Denko Corp.), December 21, 1998 (21. 12. 98), Claims; page 4, line 16 to page 5, line 7; Figs. 1, 3 (Family: none) | 1 |
| X | JP, 49-31974, U (Sachinobu Kanehira), March 19, 1974 (19. 03. 74)(Family: none) | 1 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| February 16., 1998 (16. 02. 98) | February 24, 1998 (24. 02. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)